# EUROPEAN PATENT APPLICATION

(11) **EP 4 779 506 A1**
(43) Date of publication of application: **22.07.2026**
(21) Application number: 24864205.0
(22) Date of filing: 28.06.2024
(51) Int. Cl.: G06F 30/15, G01B 21/32, G06F 30/23, G06F 111/04, G06F 119/14

(54) **METHOD AND APPARATUS FOR DETERMINING SLEEVE, COMPUTER DEVICE, AND STORAGE MEDIUM**

(30) Priority: 13.09.2023 CN 202311191387
(71) Applicant: Dongfeng Motor Group Co., Ltd., Wuhan, Hubei 430000 (CN)
(72) Inventor: WANG, Dongxiong, Wuhan, Hubei 430000 (CN); YU, Zewen, Wuhan, Hubei 430000 (CN); WANG, Ying, Wuhan, Hubei 430000 (CN); ZHOU, Kun, Wuhan, Hubei 430000 (CN); ZHENG, Yangqianlun, Wuhan, Hubei 430000 (CN)
(74) Representative: Lohmanns Lohmanns & Partner mbB
(86) International application number: PCT/CN2024/102586
(87) International publication number: WO 2025/055480

(57) **Abstract**

Disclosed in embodiments of the present application are a method and apparatus for determining a sleeve, a computer device, and a storage medium. The method comprises: for each of at least two sleeves, acquiring corresponding strain values, at at least two rotating speeds, of a motor rotor which is wound with the sleeve, and on the basis of each rotating speed and the corresponding strain value, determining the maximum rotating speed corresponding to the sleeve; and determining a target sleeve from the at least two sleeves on the basis of the maximum rotating speed corresponding to each sleeve.

## Description

The present application claims priority to Chinese Patent Application No. 202311191387.9 filed on September 13, 2023, the entire contents of which are incorporated herein by reference.

### Field of the Invention

The present application relates to the field of electric motors for new energy vehicles, in particular to a method and apparatus for determining a sleeve, a computer device, and a storage medium.

### Background of the Invention

With the rapid development of the new energy vehicle industry, permanent magnet synchronous motors are increasingly widely used in new energy vehicles. In the related art, sleeves are usually used to assist in improving the mechanical strength of the motor rotor. However, the analysis of design parameters of the sleeve is relatively difficult, making it challenging to determine a sleeve with good auxiliary effects.

### Summary of the Invention

In view of this, the embodiments of the present application provide a method and apparatus for determining a sleeve, a computer device, and a storage medium.

The technical solution of the embodiments of the present application is implemented as follows:
The embodiments of the present application provide a method for determining a sleeve, and the method comprises:
for each of at least two sleeves, acquiring corresponding strain values of a motor rotor wound with the sleeve under at least two rotating speeds, and determining a maximum rotating speed corresponding to each sleeve on the basis of each rotating speed and the corresponding strain value; and
determining a target sleeve from the at least two sleeves on the basis of the maximum rotating speed corresponding to each sleeve.

In some embodiments, the step of determining the target sleeve from the at least two sleeves on the basis of the maximum rotating speed corresponding to each sleeve comprises:
determining a target rotating speed from the maximum rotating speed corresponding to each sleeve; and taking the sleeve corresponding to the target rotating speed as the target sleeve.

In some embodiments, the step of acquiring corresponding strain values of the motor rotor wound with the sleeve under at least two rotating speeds comprises: for each of the at least two rotating speeds, acquiring the corresponding strain value of the motor rotor wound with the sleeve at the rotating speed by means of a sensor; wherein the sensor is disposed at a position on a surface of the motor rotor at which deformation is most likely to occur.

In the above embodiments, through acquiring the strain values of the rotor at different rotating speeds through the sensor installed at the position on the rotor most prone to deformation, the influence of the rotating speed on the rotor can be accurately understood, and installing the sensor at the position most prone to deformation allows direct acquisition of the upper limit of deformation achievable by the rotor, without the need to test a plurality of positions, thereby reducing testing workload and improving testing efficiency.

In some embodiments, the step of acquiring the corresponding strain value of the motor rotor wound with the sleeve at the rotating speed by means of the sensor comprises: controlling the motor rotor wound with the sleeve to operate at the rotating speed for a corresponding preset duration; and acquiring the corresponding strain value of the motor rotor at the rotating speed by means of the sensor.

In the above embodiments, for the rotor operating at different rotating speeds, acquiring the strain value after the rotor operates at a certain rotating speed for a corresponding duration allows obtaining the corresponding strain value following rotor rotation, ensuring data reliability and reducing the po ssibility of obtaining inaccurate strain values when the rotor has not yet reached stable operation, which could affect subsequent analysis.

In some embodiments, the step of determining the maximum rotating speed corresponding to each sleeve on the basis of each rotating speed and the corresponding strain value comprises: generating an operating curve of the motor rotor wound with the sleeve on the basis of each rotating speed and the corresponding strain value, wherein the operating curve represents a variation ofthe strain value with respect to the rotating speed ofthe motor rotor wound with the sleeve; determining a target feature point from at least two feature points in the operating curve, wherein each feature point comprises a rotating speed and a corresponding strain value; and determining the maximum rotating speed corresponding to the sleeve on the basis of the rotating speed corresponding to the target feature point.

In the above embodiment, through fitting the data obtained from testing to generate an operating curve ofthe motor rotor, the variation trend of the strain value with respect to the rotor rotating speed during rotor operation can be intuitively understood, thereby determining the maximum rotating speed achievable by the rotor, and compared with methods relying solely on data analysis, this approach makes it easier to obtain conclusions and provides higher reliability of the conclusions.

In some embodiments, the method further comprises: determining a parameter set, wherein the parameter set comprises at least two parameters, and each parameter comprises at least one of the following: a sleeve material, a winding angle, a number of winding layers, a winding tension, a resin content, a curing temperature, and a curing duration; and for each parameter in the parameter set, generating a sleeve corresponding to the parameter and taking the sleeve as one of the at least two sleeves.

In the above embodiments, different sleeves are determined through changing the parameters of the sleeve, and the data obtained from the previous embodiments can be analyzed to determine the influence of different parameters on the maximum rotating speed achievable by the rotor, without performing complex simulations, and the effect of different parameters on rotor rotating speed can be determined through controlling variables, making the method easy to implement.

The embodiments of the present application provide an apparatus for determining a sleeve, the apparatus comprises an acquisition module and a control module, wherein
the acquisition module is configured to, for each of at least two sleeves, acquire corresponding strain values of a motor rotor wound with the sleeve under at least two rotating speeds, and send each rotating speed and the corresponding strain value to the control module; and
the control module is configured to, for each ofthe at least two sleeves, determine a maximum rotating speed corresponding to each sleeve on the basis of each rotating speed and the corresponding strain value; and determine a target sleeve from the at least two sleeves on the basis of the maximum rotating speed corresponding to each sleeve.

In some embodiments, the acquisition module comprises a sensor, a transmitter, a receiver, and a processing unit, wherein
the sensor is configured to acquire a strain signal of the motor rotor wound with the sleeve at the rotating speed, convert the strain signal into a corresponding electrical signal, and send the electrical signal to the transmitter;
the transmitter is configured to receive the electrical signal sent by the sensor, convert the electrical signal into an electromagnetic wave signal, and send the electromagnetic wave signal to the receiver;
the receiver is configured to receive the electromagnetic wave signal sent by the transmitter, convert the electromagnetic wave signal into the electrical signal, and send the electrical signal to the processing unit; and
the processing unit is configured to receive the electrical signal sent by the receiver, convert the electrical signal into a strain value, and send the strain value and the corresponding rotating speed to the control module.

In the above embodiments, the acquisition module can obtain the strain values of the rotor in real time, and the strain value data can be transmitted to the processing unit through the transmitter and receiver, enabling acquisition of strain value data of the rotor and real-time analysis even when the rotor has a complex structure and components have irregular shapes.

The embodiments of the present application further provide a computer device, which comprises a processor and a memory, a computer program is stored in the memory, and when the processor executes the computer program, the method in the above embodiments is implemented.

The embodiments of the present application further provide a computer-readable storage medium, with a computer program stored thereon, and when the computer program is executed by a processor, the method in the above embodiments is implemented.

### Beneficial Effects

In the embodiments of the present application, the maximum rotating speed achievable by the rotor equipped with different sleeves is tested to determine the optimal sleeve. Thus, through changing the sleeves on the rotor surface and testing how different sleeves affect the maximum rotating speed of the rotor, the sleeve that achieves the highest rotating speed can be determined, and the target sleeve is identified through actual experiments, making the operation simple, minimizing errors, obtaining real and accurate experimental data, and effectively overcoming the difficulties of theoretical analysis and large simulation errors in designing built-in carbon fiber rotor sleeves.

It should be understood that the foregoing general description and the following detailed description are exemplary and explanatory, and do not limit the technical solutions of the present application.

### Brief Description of the Drawings

The drawings are incorporated into the specification and form a part thereof, these drawings illustrate embodiments in accordance with the present application and are used together with the specification to explain the technical solutions of the present application.
Fig. 1 is a flowchart of a method for determining a sleeve in the embodiment of the present application;
Fig. 2 is a flowchart of a method for determining a sleeve in the embodiment of the present application;
Fig. 3 is a flowchart of a method for determining a sleeve in the embodiment of the present application;
Fig. 4 is a flowchart of a method for determining a sleeve in the embodiment of the present application;
Fig. 5 is a flowchart of a method for determining a sleeve in the embodiment of the present application;
Fig. 6 is a flowchart of a method for determining a sleeve in the embodiment of the present application;
Fig. 7 is a flowchart of a method for determining a sleeve in the embodiment of the present application;
Fig. 8 is a schematic diagram of a structural composition of an apparatus for determining a sleeve in the embodiment of the present application;
Fig. 9 is a schematic diagram of a structural composition of an acquisition module of an apparatus for determining a sleeve in the embodiment of the present application;
Fig. 10 is a schematic diagram of a motor rotor structure and sensor placement in the embodiment of the present application;
Fig. 11 is a schematic diagram of a hardware entity of a computer device in the embodiment of the present application.

### Detailed Description of the Embodiments

In order to make the objectives, technical solutions, and advantages of the present application more apparent, the technical solutions of the present application will be further described in detail below with reference to the accompanying drawings and embodiments, the described embodiments should not be construed as limiting the present application, and all other embodiments obtained by those skilled in the art without inventive effort shall fall within the protection scope of the present application.

In the following description, reference to "some embodiments" describes a subset of all possible embodiments. It should be understood that "some embodiments" may refer to the same or different subsets of all possible embodiments, and may be combined with each other without conflict. The terms "first" and "second" are used merely to distinguish similar objects and do not imply any particular order. It should be understood that "first" and "second" may be interchanged in a specific order or sequence where permitted, so that the embodiments ofthe present application described herein can be implemented in an order other than that illustrated or described.

Unless otherwise defined, all technical and scientific terms used herein have the same meaning as commonly understood by those skilled in the art to which the present application pertains. The terminology used herein is for the purpose of describing the present application only and is not intended to limit the present application.

With the rapid development of the new energy vehicle industry, the constant demand for higher power density in electric drive systems has gradually pushed the peak rotating speed ofthe motor higher, which in turn leads to insufficient mechanical strength in the motor rotor structure. To further improve the mechanical strength of built-in permanent magnet synchronous motor rotors, fiber winding technology is generally employed. In this process, carbon fiber strands are impregnated with resin, wound along the circumferential direction onto the rotor core, and cured to form a carbon fiber sleeve. The carbon fiber sleeve generates a prestressing force on the rotor core, counteracting centrifugal deformation of the rotor structure during high-speed rotation, thereby enhancing mechanical strength of the rotor structure.

However, many factors, comprising but not limited to carbon fiber strand material, winding angle and number oflayers, winding tension, resin content ofthe sleeve, curing temperature, and curing duration, significantly affect the prestressing force provided by the carbon fiber sleeve. Additionally, built-in rotor structures comprise components such as permanent magnets, shafts, and irregularly shaped rotor cores, the complex contact conditions among these components make the strength analysis and design of the built-in carbon fiber rotor structure theoretically challenging and prone to errors in simulation analysis.

The embodiments of the present application provide a method for determining a sleeve. Through testing the maximum rotating speed achievable by the rotor equipped with different sleeves, the optimal sleeve can be determined. Thus, through changing the sleeves on the rotor surface and testing how different sleeves affect the maximum rotating speed of the rotor, the sleeve that achieves the highest rotating speed can be determined, and the target sleeve is identified through actual experiments, making the operation simple, minimizing errors, obtaining real and accurate experimental data, and effectively overcoming the difficulties of theoretical analysis and large simulation errors in designing built-in carbon fiber rotor sleeves. The method of the embodiments of the present application can be executed by a processor of a computer device. The computer device may comprise a server, notebook computer, tablet, desktop computer, mobile device (such as a mobile phone, personal digital assistant, or dedicated messaging device), or other data-processing-capable equipment.

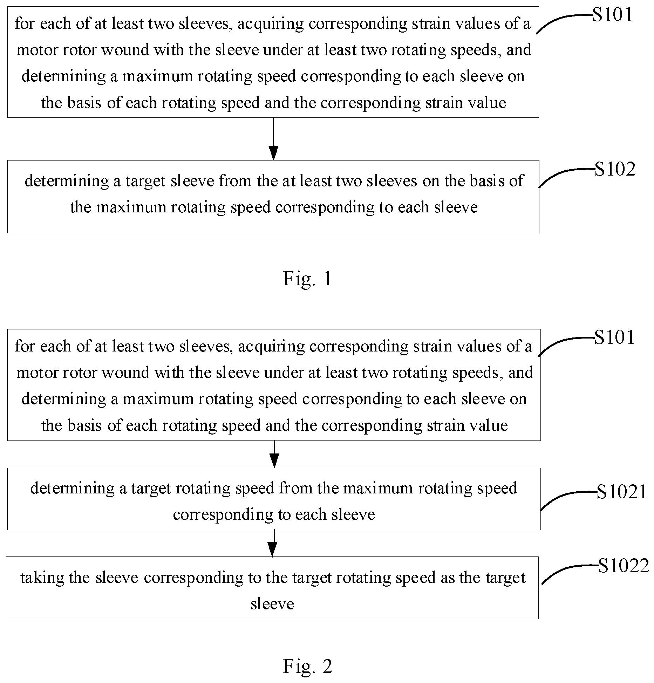

Fig. 1 is a flowchart of a method for determining a sleeve in the embodiment ofthe present application. As shown in Fig. 1, the method can comprise S101 to S102, wherein:
S 101. For each of at least two sleeves, corresponding strain values of a motor rotor wound with the sleeve under at least two rotating speeds are acquired, and a maximum rotating speed corresponding to each sleeve is determined on the basis of each rotating speed and the corresponding strain value.

In some embodiments, the motor rotor wound with different sleeves can be the same motor rotor. That is, after testing the rotor with one sleeve, the sleeve can be removed and another sleeve can be wound on the same rotor for testing. Alternatively, a plurality of motor rotors can be respectively equipped with different sleeves. It should be noted that, to obtain data suitable for comparative analysis, when the plurality of the motor rotors are used for testing, the same type of rotor should be employed.

In some embodiments, the strain value of the motor rotor reflects the degree of deformation of the motor rotor. Generally, the larger the strain value of the motor rotor, the greater the deformation. The strain value of the motor rotor at each rotating speed refers to the strain value after the rotor has reached stable operation at that rotating speed. Specifically, at low speeds, the motor rotor exhibits larger vibration amplitudes, which gradually decrease as the speed increases. The stable operation as mentioned above can refer to running at a certain rotating speed until the motor rotor does not vibrate or the vibration amplitude decreases to a normal level. Exemplarily, the motor rotor accelerates gradually from a stationary or low-speed state to the target test speed. During acceleration, the rotor may experience vibration and other disturbances, so the strain value of the motor rotor needs to be acquired when the rotor reaches stable operation. Further, the maximum rotating speed corresponding to the sleeve refers to the maximum rotating speed that the rotor equipped with the sleeve can actually achieve. The maximum rotating speed refers to the maximum rotating speed that the rotor can reach while its strain values remain within a controllable range. Specifically, before the motor rotor reaches the maximum rotating speed, the strain value of the motor rotor is approximately linearly related to the rotating speed. The change of the strain values varies regularly with the rotating speeds. When the rotating speed rises to a certain value and the strain values suddenly jump, it indicates that the centrifugal force generated by the motor rotor rotation exceeds the constraining capacity of the sleeve. Therefore, the maximum rotating speed that can be reached before the strain value jumps can be regarded as the maximum rotating speed corresponding to the sleeve currently installed on the motor rotor.

In some embodiments, prior to S 101, the assembly of the motor rotor assembly needs to be completed, and the surface of the rotor needs to be pretreated. Exemplarily, pre-treatment comprises, but is not limited to, grinding, cleaning, and polishing.

Based on the above embodiments, through performing actual testing to obtain the strain values corresponding to each sleeve at a plurality of rotating speeds, the strain value of the motor rotor at each rotating speed can be accurately acquired, thereby determining how the strain value ofthe motor rotor changes with the rotating speed. In this way, the data obtained from experiments are more accurate and reliable, and it is only necessary to test the strain values of the motor rotor equipped with different sleeves, and through combining the corresponding rotating speeds at these strain values, the maximum constraint capability of each sleeve on the rotor, that is, the highest achievable rotating speed of the rotor, can be determined.

S 102. A target sleeve is determined from the at least two sleeves on the basis of the maximum rotating speed corresponding to each sleeve.

In some embodiments, the target sleeve is the one corresponding to the highest value among the maximum rotating speeds of all sleeves, and the maximum rotating speed for each sleeve refers to the highest rotating speed that the motor rotor can reach when that sleeve is installed. Exemplarily, if there are five sleeves, A, B, C, D, and E, and the maximum rotating speeds corresponding to these five sleeves are 9500 rpm, 9800 rpm, 9700 rpm, 9700 rpm, and 10000 rpm, respectively, sleeve E can be determined as the target sleeve.

It should be noted that the target sleeve can be one of the at least two sleeves, or it can be a plurality of sleeves, depending on the maximum rotating speeds corresponding to the sleeves. If a plurality of sleeves have the same maximum and highest rotating speed, all of these sleeves can be determined as target sleeves.

Based on the above embodiments, the target sleeve, which can provide the strongest constraint effect on the motor rotor, can be determined according to the maximum rotating speed corresponding to each sleeve. Through analyzing data obtained from actual testing, the optimal sleeve is identified, significantly reducing errors caused by simulation or modeling, enabling accurate and reliable experimental and analytical results, and providing data support for the subsequent design of sleeves.

In some embodiments, S102 comprises: determining the target rotating speed from the maximum rotating speed corresponding to each sleeve, and taking the sleeve corresponding to the target rotating speed as the target sleeve.

Fig. 2 is a flowchart of a method for determining a sleeve in the embodiment ofthe present application. Based on Fig. 1, S102 in Fig. 1 can be updated to S1021 to S1022. With reference to the steps shown in Fig. 2, the method comprises the following steps:
S 101. For each of at least two sleeves, corresponding strain values of a motor rotor wound with the sleeve under at least two rotating speeds are acquired, and a maximum rotating speed corresponding to each sleeve is determined on the basis of each rotating speed and the corresponding strain value.
S 1021. A target rotating speed is determined from the maximum rotating speed corresponding to each sleeve.

In some embodiments, the target rotating speed is the largest value among the maximum rotating speeds corresponding to all sleeves. Exemplarily, if three sleeves correspond to maximum rotating speeds of 9800 rpm, 10000 rpm, and 9500 rpm, the largest value is 10000 rpm, which can be determined as the target rotating speed.

Based on the above embodiments, the maximum rotating speed achievable by the motor when the motor rotor is equipped with different sleeves, namely the target rotating speed, can be determined. Since the data is obtained through actual testing, it has high reliability and accuracy, and the determined target rotating speed is therefore highly reliable, providing data support for selecting the target sleeve.

S 1022. The sleeve corresponding to the target rotating speed is taken as the target sleeve.

In some embodiments, the target rotating speed can correspond to one or more sleeves. Exemplarily, if there are three sleeves, A, B, and C, with maximum rotating speeds of 9500 rpm, 9800 rpm, and 9800 rpm, respectively, the target rotating speed is determined as 9800 rpm based on the foregoing steps. In this case, since the maximum rotating speeds corresponding to sleeves B and C are both 9800 rpm, sleeves B and C can be determined as the target sleeves.

Based on the above embodiments, through determining the sleeve corresponding to the highest rotating speed as the target sleeve, the sleeve with relatively high strength can be identified, providing data support for subsequent analysis of sleeve design parameters and the design of the sleeve. Moreover, this method for determining the target sleeve is highly repeatable, allowing it to be performed a plurality of times and minimizing errors caused by random factors or other disturbances.

In some embodiments, S101 comprises acquiring, for each of the at least two rotating speeds, the corresponding strain value ofthe motor rotor wound with the sleeve at the rotating speed by means of a sensor.

The sensor is disposed at a position on the surface of the motor rotor at which deformation is most likely to occur.

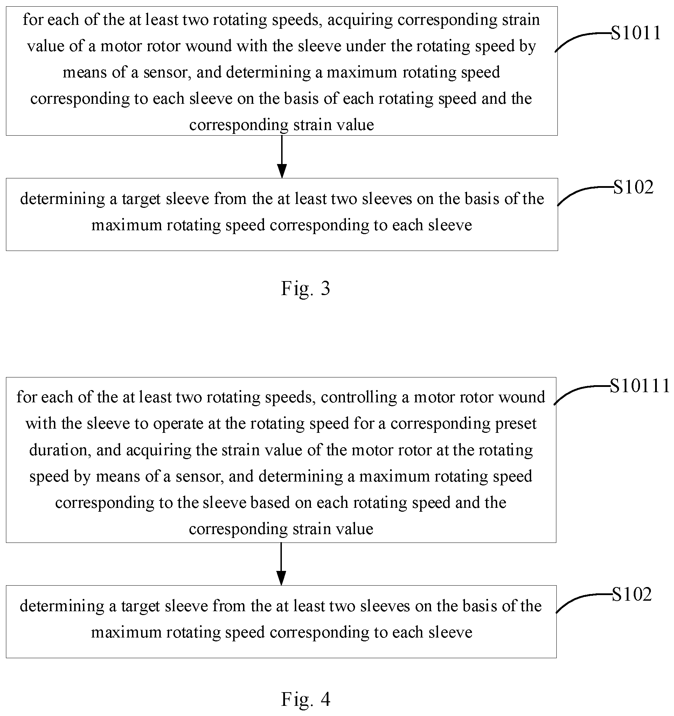

Fig. 3 is a flowchart of a method for determining a sleeve in the embodiment ofthe present application. Based on Fig. 1, S101 in Fig. 1 can be updated to S1011. With reference to the steps shown in Fig. 3, the method comprises the following steps:
S 1011. For each ofthe at least two rotating speeds, a sensor is adopted to acquire the strain value of the motor rotor wound with the sleeve at the corresponding rotating speed, and based on each rotating speed and its corresponding strain value, the maximum rotating speed corresponding to the sleeve is determined.

The sensor is disposed at a position on the surface of the motor rotor at which deformation is most likely to occur.

In some embodiments, for a plurality of rotating speeds to be tested, the motor rotor needs to gradually accelerate to higher rotating speeds. During this process, the strain values of the motor rotor at lower rotating speeds can be acquired first, followed by the strain values at higher rotating speeds. Exemplarily, if it is required to test and acquire the strain values of the motor rotor with a sleeve installed at each rotating speed within the range of 5000 rpm to 10000 rpm, the strain value at 5000 rpm can be acquired when the rotor accelerates to that speed, and then the strain values at other speeds can be acquired respectively as the motor rotor continues to accelerate. It should be noted that the term "each rotating speed" referred to in the above embodiments indicates a set of speeds to be tested at fixed intervals. For instance, the rotating speeds at which the strain values need to be tested can comprise 5000 rpm, 5200 rpm, 5400 rpm, ... up to 10000 rpm. In this case, testing is performed at an interval of 200 rpm. The testing interval can be adjusted according to actual requirements, and a plurality of testing intervals can be set within one testing range or in a single test. 200 rpm is taken as an example of a rotating speed testing interval herein.

In some embodiments, the wireless strain sensor used to test the strain value of the motor rotor can be sensors such as a wireless passive textile strain sensor, an embedded wireless strain gauge. No specific limitation is made herein on the type of sensor, the sensor that can acquire a relatively accurate strain value of the motor rotor can be used in the above embodiments. Furthermore, the sensor is installed at the position of the motor rotor where the deformation is most likely to occur. This is because the irregular shape of the motor rotor results in different centrifugal forces at different positions during high-speed rotation. The combination of the above factors causes different degrees of deformation in various parts of the motor rotor at the same rotating speed. However, for safety considerations, the most deformable part must also maintain a stable state at high speeds. For this reason, the sensor is installed at the position of the motor rotor where the deformation is most likely to occur. Specifically, the position on the motor rotor where deformation is most likely to occur can be determined by means of software analysis, simulation, and machine modeling. Exemplarily, finite element analysis software can be employed to perform deformation analysis on the rotor under high-speed operating conditions so as to determine the area most likely to deform.

Based on above embodiments, through acquiring the deformation state of the motor rotor, i.e., the strain value by the sensor in real time, testers can grasp the deformation state of the motor rotor during operation in real time. Compared with the method in which the rotor state is measured in advance, the state of the motor rotor after operation is tested subsequently, and the deformation ofthe motor rotor is determined through comparing the difference between the two states, the present solution features the advantage of reduced testing errors. Since some motor rotor materials exhibit memory or elastic properties, the deformation will rebound after the motor rotor stops running, thereby resulting in measurement errors. Thus, the accuracy and timeliness of the obtained test data are improved.

S102. A target sleeve is determined from the at least two sleeves on the basis of the maximum rotating speed corresponding to each sleeve.

In some embodiments, S1011 comprises: controlling the motor rotor wound with the sleeve to operate at the rotating speed for a corresponding preset duration; and acquiring the corresponding strain value of the motor rotor at the rotating speed by means of the sensor.

Fig. 4 is a flowchart of a method for determining a sleeve in the embodiment. Based on Fig. 3, S1011 in Fig. 3 can be updated to S10111. With reference to the steps shown in Fig. 4, the method comprises the following steps:
S10111. For each of the at least two rotating speeds, the motor rotor wound with the sleeve is controlled to operate at the rotating speed for a corresponding preset duration, and the strain value of the motor rotor is acquired at the rotating speed by means of the sensor, and the maximum rotating speed corresponding to the sleeve is determined based on each rotating speed and the corresponding strain value.

In some embodiments, different durations are allowed for different rotating speeds. The reason is that when the motor rotor accelerates from rest or low speed to a certain speed, the operating state may be unstable when the speed is just reached. Therefore, the rotor needs to be maintained at the speed for a period of time, and the corresponding strain value of the motor rotor is acquired by the sensor after the rotor reaches stable operation. Exemplarily, at lower rotating speeds, the motor rotor can be run for a relatively longer duration to obtain more accurate strain values. For instance, when the speed is below 3000 rpm, the motor rotor can be operated for 2 minutes before acquiring the corresponding strain value. For rotating speeds above 3000 rpm, the preset duration can be appropriately shortened. For example, at 5000 rpm, the motor can be operated for only 1 minute to avoid prolonged operation at high speeds, which could damage the rotor or even cause safety hazards.

S102. A target sleeve is determined from the at least two sleeves on the basis of the maximum rotating speed corresponding to each sleeve.

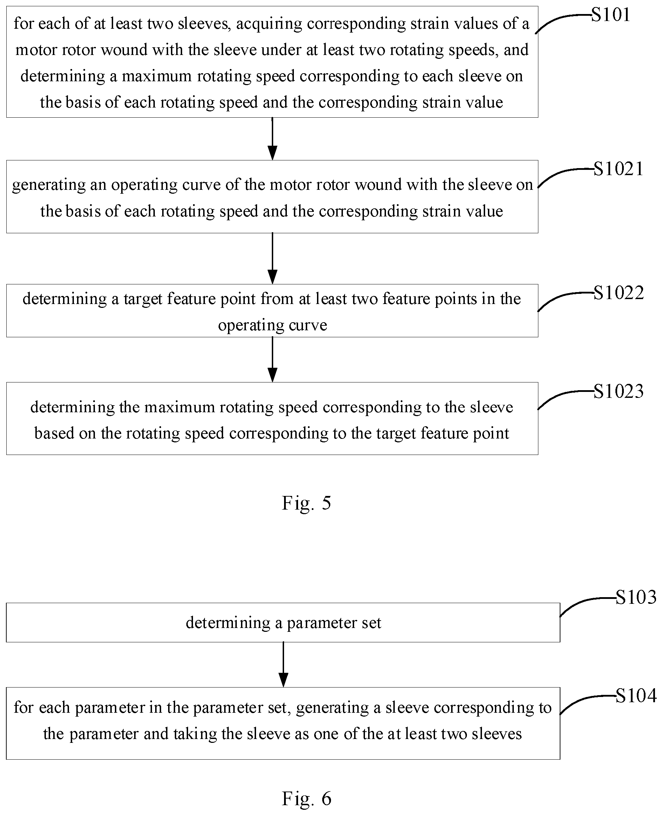

Fig. 5 is a flowchart of a method for determining a sleeve in the embodiment ofthe present application. Based on Fig. 1, S102 in Fig. 1 can be updated to S1021 to S1023. With reference to the steps shown in Fig. 5, the method comprises the following steps:
S 101. For each of at least two sleeves, corresponding strain values of a motor rotor wound with the sleeve under at least two rotating speeds are acquired, and a maximum rotating speed corresponding to each sleeve is determined on the basis of each rotating speed and the corresponding strain value.
S 1021. An operating curve of the motor rotor wound with the sleeve is generated on the basis of each rotating speed and the corresponding strain value.

The operating curve represents the variation of the strain value of the motor rotor wound with the sleeve with respect to the rotating speed.

In some embodiments, a coordinate system can be established based on rotating speed and strain value, the rotating speed and strain value of the motor rotor under each operating condition are mapped to a coordinate point in the coordinate system, and a set of coordinate points under each operating condition is then fitted to obtain the operating curve ofthe motor rotor wound with the sleeve. Exemplarily, the curve fitting can be performed using methods such as least squares fitting, polynomial fitting, or any other method capable of generating a curve from a plurality of data points.

Based on the above embodiments, the acquired data can be fitted into a graphical curve, which allows a more intuitive understanding of how the strain value ofthe motor rotor changes with rotating speed during operation. Moreover, through combining numerical data with graphical representation, the variation trend of the strain value during motor rotor operation can be more clearly reflected, thereby improving the convenience of subsequent analysis.

S 1022. A target feature point is determined from at least two feature points in the operating curve, wherein each feature point comprises a rotating speed and a corresponding strain value.

In some embodiments, the target feature point is an inflection point of the operating curve. When a plurality of inflection points exist in the curve, the first inflection point of the operating curve is determined as the target feature point. Exemplarily, before the motor rotor wound with the sleeve reaches the maximum rotating speed, the curve of its strain value versus rotating speed is a smooth curve, which can also be approximated as a linear function. When the motor rotor accelerates to a certain speed, the strain value exhibits a sudden change, which is reflected on the curve as a difference in concavity on either side of the inflection point or a change in direction. This inflection point can also be determined by calculating the second derivative ofthe function, and the second derivative of the function curve at the inflection point is zero. The method for determining the inflection point is not limited to the one mentioned in the above embodiment. Since curves obtained from different fitting methods may have slight differences, the corresponding inflection points may also vary. The inflection point can be determined through combining a plurality of fitting methods and inflection point determination approaches. Meanwhile, to ensure the safe operation of the motor rotor in practical applications, after determining the inflection point based on the operating curve, the feature point preceding the inflection point can be selected as the target feature point according to the actual situation.

Based on the above embodiments, through determining the inflection point from the operating curve and thus identifying the target feature point, it is possible to accurately obtain the rotating speed at which a sudden change occurs in the motor rotor strain value, providing data support for subsequent sleeve design. Moreover, when the motor rotor operating curve has already been obtained, the target feature point can be flexibly selected according to actual situation, which increases the flexibility of the method.

S 1023. The maximum rotating speed corresponding to the sleeve is determined based on the rotating speed corresponding to the target feature point.

In some embodiments, after determining the target feature point, the rotating speed corresponding to the target feature point can be determined as the maximum rotating speed corresponding to the sleeve. Exemplarily, if the rotating speed corresponding to the target feature point is 8000 rpm, the maximum rotating speed corresponding to the sleeve can be determined as 8000 rpm.

Based on the above embodiments, through obtaining the rotating speed corresponding to the target feature point, the maximum rotating speed corresponding to the sleeve can be determined, reducing accidental errors arising from determining the maximum rotating speed of the sleeve using only data, and thereby improving the reliability of subsequent sleeve design.

Fig. 6 is an optional flowchart of a method for determining a sleeve in the embodiment of the present application. Based on any of the above embodiments, the method further comprises S103 to S 104. With reference to the steps shown in Fig. 6, the method comprises the following steps:
S103: A parameter set is determined.

The parameter set comprises at least two parameters, and each parameter comprises at least one of the following: a sleeve material, a winding angle, a number of winding layers, a winding tension, a resin content, a curing temperature, and a curing duration.

In some embodiments, a default parameter can be preset, and the parameters comprised in the parameter set can be modified based on the default parameter. Exemplarily, if a parameter comprises sleeve material and winding angle, it indicates that the parameter only modifies the sleeve material and winding angle relative to the default parameter, while other parameters remain the same as the default parameter. It should be noted that curing temperature ofthe sleeve does not exceed a maximum operating temperature of the sensor and the motor rotor, so as to prevent damage to the sensor and the motor.

In some embodiments, a winding and forming process of the sleeve can adopt a dry winding and forming process, a wet winding and forming process, a semi-dry winding and forming process, or the like. The sleeve material can be made of carbon fiber, specifically, materials such as T700, T800, T1000, or M40 can be used. T represents the tensile strength of the carbon fiber material, with a larger number after T indicating higher tensile strength, and M represents the modulus of the carbon fiber material, with a larger number after M indicating a higher modulus.

Based on the above embodiments, the parameter set can be generated through changing the design parameters of the sleeve. Each parameter in the parameter set can be used to design a sleeve, and during testing, the parameters in the parameter set can be directly applied to the sleeve design. Moreover, only one or a plurality of parameters of the sleeve need to be adjusted, reducing the complexity of design parameters and improving design efficiency.

S 104. For each parameter in the parameter set, a sleeve corresponding to the parameter is generated and the sleeve is taken as one of the at least two sleeves.

In some embodiments, when it is necessary to test a sleeve, the corresponding parameters can be retrieved from the parameter set to generate the sleeve. Exemplarily, when it is desired to determine the effect of changing a certain parameter on sleeve strength, that is, its effect on the maximum rotating speed corresponding to the sleeve, a plurality of parameters can be retrieved from the parameter set to generate the corresponding sleeve, and only the parameter to be evaluated is changed among the retrieved parameters. For cases where each sleeve needs to be tested, the corresponding sleeve can be generated simply through retrieving the parameters.

Based on the above embodiments, generating the corresponding sleeve using parameters from the parameter set reduces the complexity of parameter design during sleeve generation, and allows testing to proceed continuously, thereby improving the efficiency of method execution.

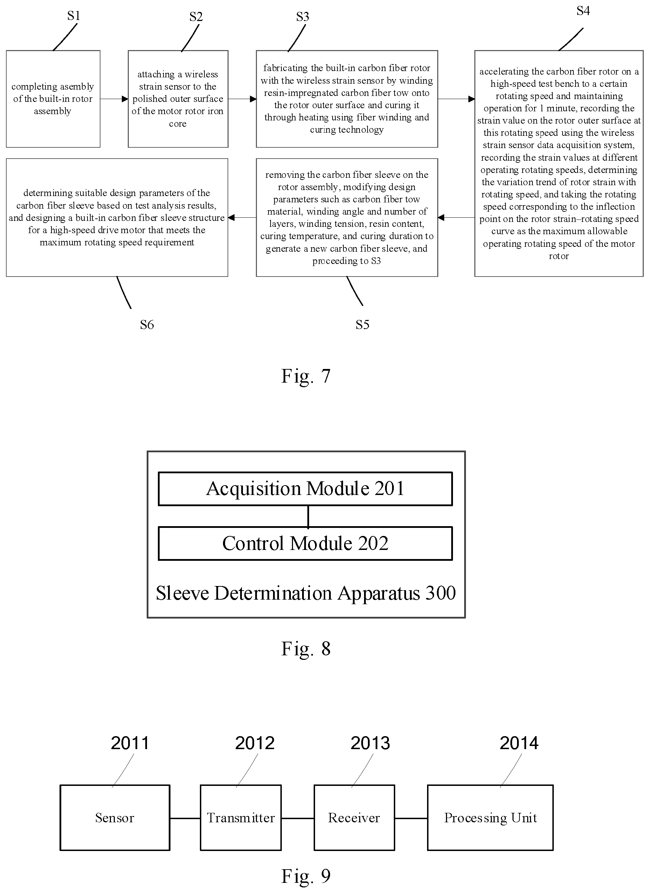

An exemplary application of the embodiments of the present application in a practical scenario will be described in the following. Fig. 7 is a flowchart of a method for determining a sleeve in the embodiment of the present application. The method comprises S1 to S6. With reference to the steps shown in Fig. 7, the method comprises the following steps.

S1: Assembly of the built-in rotor assembly is completed.

S2: A wireless strain sensor is attached to the polished outer surface of the motor rotor iron core.

The wireless strain sensor herein can be a wireless passive textile strain sensor or an embedded micro-electro-mechanical system (MEMS) wireless strain gauge.

S3: The built-in carbon fiber rotor with the wireless strain sensor is fabricated through winding resin-impregnated carbon fiber tow onto the outer surface of the rotor and curing it through heating using fiber winding and curing technology.

It should be noted that the heating and curing temperature must not exceed the maximum allowable operating temperature of the wireless strain sensor and the permanent magnet, so as to avoid damaging the wireless strain sensor.

S4:On a high-speed test bench, the carbon fiber rotor is accelerated to a certain rotating speed and maintained at operation for 1 minute, and the strain value on the rotor outer surface at this rotating speed is recorded by the wireless strain sensor data acquisition system, and the strain values at different operating rotating speeds are recorded, the variation trend of rotor strain with rotating speed is determined, and the rotating speed corresponding to the inflection point on the rotor strain-rotating speed curve is taken as the maximum allowable operating rotating speed of the motor rotor.

S5: The carbon fiber sleeve on the rotor assembly is removed, and design parameters such as carbon fiber tow material, winding angle and number of layers, winding tension, resin content, curing temperature, and curing duration are modified to generate a new carbon fiber sleeve, which then proceeds to S3.

It should be noted that if the sensor is damaged, S2 must be repeated. After testing all sleeves to be tested, or when the test operator stops the testing equipment, the process proceeds to S6.

S6: Based on the test analysis results, the suitable design parameters of the carbon fiber sleeve are determined, and a built-in carbon fiber sleeve structure for a high-speed drive motor that meets the maximum rotating speed requirement is designed.

Based on the above embodiments, the present application also provides an apparatus for determining a sleeve. Fig. 8 is a schematic diagram of a structural composition of an apparatus for determining a sleeve in the embodiment of the present application. The apparatus for determining the sleeve comprises an acquisition module 201 and a control module 202.

The acquisition module 201 is configured to, for each of at least two sleeves, acquire corresponding strain values of a motor rotor wound with the sleeve under at least two rotating speeds, and send each rotating speed and the corresponding strain value to the control module.

The control module 202 is configured to, for each of the at least two sleeves, determine a maximum rotating speed corresponding to each sleeve on the basis of each rotating speed and the corresponding strain value; and determine a target sleeve from the at least two sleeves on the basis of the maximum rotating speed corresponding to each sleeve.

In some embodiments, the control module 202 is further configured to determine a target rotating speed from the maximum rotating speed corresponding to each sleeve; and take the sleeve corresponding to the target rotating speed as the target sleeve.

In some embodiments, the acquisition module 201 is further configured to, for each of the at least two rotating speeds, acquire the strain value of the motor rotor wound with the sleeve at the rotating speed by using a sensor.

In some embodiments, the control module 202 is further configured to control the motor rotor wound with the sleeve to operate at the rotating speed for a corresponding preset duration.

In some embodiments, the acquisition module 201 is further configured to acquire the corresponding strain value of the motor rotor at the rotating speed by means of the sensor.

In some embodiments, the control module 202 is further configured to generate an operating curve ofthe motor rotor wound with the sleeve on the basis of each rotating speed and the corresponding strain value; determine a target feature point from at least two feature points in the operating curve; and determine the maximum rotating speed corresponding to the sleeve on the basis of the rotating speed corresponding to the target feature point.

In some embodiments, the control module 202 is further configured to determine a parameter set; and for each parameter in the parameter set, generate a sleeve corresponding to the parameter and take the sleeve as one of the at least two sleeves.

Fig. 9 is a schematic diagram of a structural composition of an acquisition module of an apparatus for determining a sleeve in the embodiment of the present application. In some embodiments, the acquisition module 201 comprises a sensor 2011, a transmitter 2012, a receiver 2013, and a processing unit 2014.

The sensor 2011 is configured to acquire a strain signal of the motor rotor wound with the sleeve at the rotating speed, convert the strain signal into a corresponding electrical signal, and send the electrical signal to the transmitter.

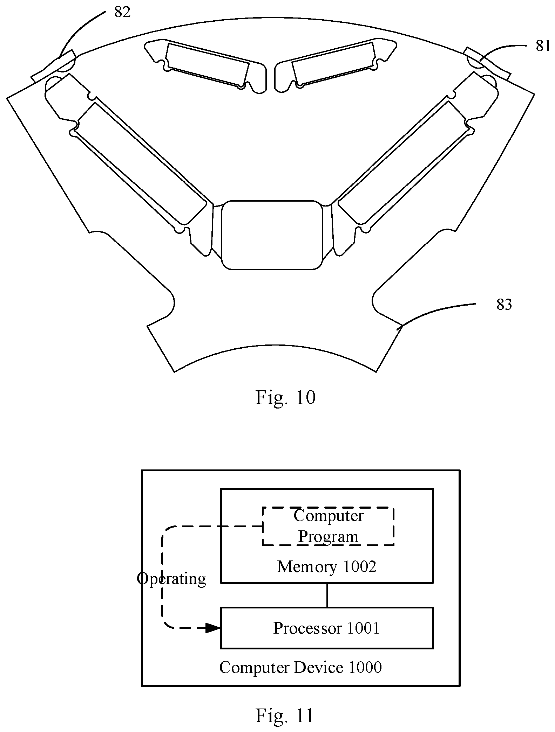

In some embodiments, the sensor 2011 is further configured to, for each of at least two sleeves, acquire the strain values of the motor rotor wound with the sleeve under at least two rotating speeds. The sensor is arranged at a position on the surface of the motor rotor most prone to deformation. As shown in Fig. 10, which is a schematic diagram of a rotor structure and sensor placement in the embodiments of the present application, wherein a sensor 81 and a sensor 82 are arranged at positions on a motor rotor 83 most prone to deformation.

The transmitter 2012 is configured to receive the electrical signal sent by the sensor, and convert the electrical signal into an electromagnetic wave signal, and send the electromagnetic wave signal to the receiver.

The receiver 2013 is configured to receive the electromagnetic wave signal sent by the transmitter, and convert the electromagnetic wave signal into the electrical signal, and send the electrical signal to the processing unit.

The processing unit 2014 is configured to receive the electrical signal sent by the receiver, and convert the electrical signal into a strain value, and send the strain value and the corresponding rotating speed to the control module.

In some embodiments, the processing unit 2014 is further configured to send each rotating speed and the corresponding strain value to the control module.

In some embodiments, the processing unit 2014 is further configured to, for each of the at least two rotating speeds, acquire strain value of the motor rotor wound with the sleeve at the rotating speed by using a sensor.

In some embodiments, the processing unit 2014 is further configured to acquire the corresponding strain value of the motor rotor at the rotating speed by means of the sensor.

The description of the above apparatus embodiments is similar to the description of the method embodiments described above and has similar advantageous effects as the method embodiments. In some embodiments, functions of the apparatus or modules comprised in the apparatus can be used to perform the methods described in the above method embodiments. For technical details not disclosed in the apparatus embodiments, reference may be made to the description of the method embodiments.

It should be noted that, in the embodiments ofthe present application, if the above operation mode updating method is implemented in the form of software functional modules and sold or used as an independent product, it can also be stored in a computer-readable storage medium. Based on this understanding, the technical solution in the embodiment of the present application, or the part that contributes to the existing technology can be embodied as a software product. This software product is stored in a storage medium and comprises several instructions that enable a computer device (which can be a personal computer, server, or network device, etc.) to execute all or part of the method in the various embodiments of the present application. The storage medium described above comprises, for example, a USB flash drive, a removable hard disk, a read-only memory (Read Only Memory, ROM), a magnetic disk, or an optical disk, and other media capable of storing program code. Therefore, the embodiments ofthe present application are not limited to any specific hardware, software, firmware, or any combination of hardware, software, and firmware.

The embodiments of the present application provide a computer device, which comprises a memory and a processor, the memory stores a computer program executable on the processor, and the processor executes the program to implement part or all of the steps of the method described above.

The embodiments of the present application provide a computer-readable storage medium, on which a computer program is stored. When the computer program is executed by a processor, part or all ofthe steps of the method described above are implemented. The computer-readable storage medium may be transient or non-transient.

The embodiments of the present application provide a computer program, which comprises computer-readable code. When the computer-readable code runs on a computer device, a processor in the computer device executes part or all of the steps of the method described above.

The embodiments of the present application provide a computer program product, which comprises a non-transient computer-readable storage medium storing a computer program. When the computerprogram is read and executed by a computer, part or all of the steps of the method described above are implemented. The computer program product can be implemented in hardware, software, or a combination of hardware and software. In some embodiments, the computer program product is embodied as a computer storage medium. In other embodiments, the computer program product is embodied as a software product, such as a software development kit (SDK).

It should be noted that the above description of the embodiments focuses on differences among embodiments, and similar or corresponding parts may refer to each other. The descriptions of the device, storage medium, computer program, and computer program product embodiments are similar to the descriptions ofthe method embodiments and have similar beneficial effects. For technical details not disclosed in the embodiments of the device, storage medium, computer program, and computer program product of the present application, reference can be made to the descriptions of the method embodiments of the present application.

Fig. 11 is a schematic diagram of a hardware entity of a computer device in the embodiment of the present application. As shown in Fig. 11, the hardware entity of the computer device 1000 comprises a processor 1001 and a memory 1002, wherein the memory 1002 stores a computer program that can run on the processor 1001, and the processor 1001 executes the program to perform the steps of any one of the embodiments of the methods described above.

The memory 1002 stores a computer program executable on the processor 1001. The memory 1002 is configured to store instructions and applications executable by the processor 1001, and can also cache data to be processed or already processed by the processor 1001 and various modules within the computer device 1000. The memory 1002 can be implemented by flash memory (FLASH) or random access memory (RAM).

When the processor 1001 executes the program, it implements the steps of any of the above operation mode update methods. The processor 1001 generally controls the overall operation of the computer device 1000.

The present embodiment provides a computer-readable storage medium. The computer-readable storage medium stores one or more programs, and the one or more programs can be executed by one or more processors to implement the steps of the operation mode update method of any of the above embodiments.

It should be noted that the description of the storage medium and device embodiments is similar to the description of the method embodiments and provides beneficial effects similar to those ofthe method embodiments. For technical details not disclosed in the storage medium and device embodiments ofthe present application, reference can be made to the description of the method embodiments of the present application.

The processor can be at least one of an application specific integrated circuit (ASIC), a digital signal processor (DSP), a digital signal processing device (DSPD), a programmable logic device (PLD), a field programmable gate array (FPGA), a central processing unit (CPU), a controller, a microcontroller, or a microprocessor. It is understandable that the electronic components used to implement the functions of the processor may vary, and the present embodiment does not impose any specific limitation.

The above-mentioned computer storage medium/memory can be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk, or a compact disc read-only memory (CD-ROM), or other types of memory. It can also be various terminals comprising one or any combination of the above-mentioned memories, such as a mobile phone, a computer, a tablet device, a personal digital assistant (PDA), and so on.

Throughout the specification, "an embodiment" or "one embodiment" means that a particular feature, structure, or characteristic related to the embodiment is included in at least one embodiment of the present application. Therefore, the phrases "in an embodiment" or "in one embodiment" appearing throughout the specification do not necessarily refer to the same embodiment. In addition, these particular features, structures, or characteristics can be combined in any suitable manner in one or more embodiments. It should be understood that, in the various embodiments of the present application, the numerical order of the above steps or processes does not imply any sequence of execution. The execution order of the steps or processes should be determined based on their functions and internal logic, and should not impose any limitation on the implementation of the embodiments of the present application. The above-mentioned serial numbers in the embodiments of the present application are only for description, and do not represent the advantages or disadvantages of the embodiments.

Moreover, the terms "include", "comprise" or any other variants thereof are intended to cover non-exclusive inclusion, so that a process, method, article or apparatus comprising a series of elements not only comprises those elements, but also comprises those that are not explicitly listed, or further comprises elements inherent to the process, method, article, or apparatus. If there are no more restrictions, the elements defined by the sentence "comprising a..." does not exclude the existence of other same elements in the process, method, article, or apparatus comprising the elements.

In the embodiments provided in the present application, it should be understood that the disclosed devices and methods can be implemented in other manners. The device embodiments described above are merely exemplary. For example, the division of units is only a logical functional division. In actual implementation, other division approaches can be used, such as: a plurality of units or components can be combined, or integrated into another system, or some features can be omitted or not executed. In addition, the couplings, or direct couplings, or communication connections between the various components shown or discussed can be indirect couplings or communication connections through certain interfaces, devices, or units, and can be electrical, mechanical, or in other forms.

The units described above as separate components can be, or can also not be, physically separate, and the components displayed as units can be, or can also not be, physical units; they can be located in one place or distributed across a plurality of network units; and some or all units can be selected according to actual needs to achieve the objectives of the present embodiment.

In addition, in the embodiments of the present application, all functional units can be fully integrated into a single processing unit, or each unit may function independently, or two or more units can be integrated into a single unit; the integrated units can be implemented in hardware, or in a combination of hardware and software functional units. Those skilled in the art can understand that all or part of the steps of the above method embodiments can be implemented by hardware related to program instructions, the aforementioned program can be stored in a computer-readable storage medium, and when executed, performs the steps of the above method embodiments; the storage medium comprises, for example, a mobile storage device, a read-only memory (Read Only Memory, ROM), a magnetic disk, or an optical disk, and other media capable of storing program code.

Alternatively, if the integrated units are implemented as software functional modules and sold or used as independent products, they can also be stored on a computer-readable storage medium. Based on this understanding, the technical solution the present application, or the part that contributes to the existing technology can be embodied as a software product. This computer software product is stored in a storage medium and comprised several instructions that enable a computer device (which can be a personal computer, server, or network device, etc.) to execute all or part of the method in the various embodiments of the present application. The storage medium comprises, for example, a mobile storage device, a read-only memory (Read Only Memory, ROM), a magnetic disk, or an optical disk, and other media capable of storing program code.

The above descriptions are only illustrative of the embodiments of the present application. The protection scope of the present application is not limited thereto. Any variations or substitutions readily apparent to those skilled in the art within the disclosed technical scope of the present application should be encompassed within the protection scope of the present application.

## Claims

1. A method for determining a sleeve, comprising:
for each of at least two sleeves, acquiring corresponding strain values of a motor rotor wound with the sleeve under at least two rotating speeds, and determining a maximum rotating speed corresponding to each sleeve on the basis of each rotating speed and the corresponding strain value; and
determining a target sleeve from the at least two sleeves on the basis of the maximum rotating speed corresponding to each sleeve.

2. The method according to claim 1, wherein the step of determining the target sleeve from the at least two sleeves on the basis of the maximum rotating speed corresponding to each sleeve comprises:
determining a target rotating speed from the maximum rotating speed corresponding to each sleeve; and
taking the sleeve corresponding to the target rotating speed as the target sleeve.

3. The method according to claim 1, wherein the step of acquiring corresponding strain values ofthe motor rotor wound with the sleeve under at least two rotating speeds comprises:
for each of the at least two rotating speeds, acquiring the corresponding strain value of the motor rotor wound with the sleeve at the rotating speed by means of a sensor; wherein the sensor is disposed at a position on a surface of the motor rotor at which deformation is most likely to occur.

4. The method according to claim 3, wherein the step of acquiring the corresponding strain value of the motor rotor wound with the sleeve at the rotating speed by means of the sensor comprises:
controlling the motor rotor wound with the sleeve to operate at the rotating speed for a corresponding preset duration; and
acquiring the corresponding strain value of the motor rotor at the rotating speed by means of the sensor.

5. The method according to claim 1, wherein the step of determining the maximum rotating speed corresponding to each sleeve on the basis of each rotating speed and the corresponding strain value comprises:
generating an operating curve of the motor rotor wound with the sleeve on the basis of each rotating speed and the corresponding strain value, wherein the operating curve represents a variation ofthe strain value with respect to the rotating speed of the motor rotor wound with the sleeve;
determining a target feature point from at least two feature points in the operating curve, wherein each feature point comprises a rotating speed and a corresponding strain value; and
determining the maximum rotating speed corresponding to the sleeve on the basis of the rotating speed corresponding to the target feature point.

6. The method according to any one of claims 1 to 5, wherein the method further comprises:
determining a parameter set, wherein the parameter set comprises at least two parameters, and each parameter comprises at least one of the following: a sleeve material, a winding angle, a number of winding layers, a winding tension, a resin content, a curing temperature, and a curing duration; and
for each parameter in the parameter set, generating a sleeve corresponding to the parameter and taking the sleeve as one of the at least two sleeves.

7. An apparatus for determining a sleeve, comprising an acquisition module and a control module, wherein
the acquisition module is configured to, for each of at least two sleeves, acquire corresponding strain values of a motor rotor wound with the sleeve under at least two rotating speeds, and send each rotating speed and the corresponding strain value to the control module; and
the control module is configured to, for each ofthe at least two sleeves, determine a maximum rotating speed corresponding to each sleeve on the basis of each rotating speed and the corresponding strain value; and determine a target sleeve from the at least two sleeves on the basis of the maximum rotating speed corresponding to each sleeve.

8. The apparatus according to claim 7, wherein the acquisition module comprises a sensor, a transmitter, a receiver, and a processing unit, wherein
the sensor is configured to acquire a strain signal of the motor rotor wound with the sleeve at the rotating speed, convert the strain signal into a corresponding electrical signal, and send the electrical signal to the transmitter;
the transmitter is configured to receive the electrical signal sent by the sensor, convert the electrical signal into an electromagnetic wave signal, and send the electromagnetic wave signal to the receiver;
the receiver is configured to receive the electromagnetic wave signal sent by the transmitter, convert the electromagnetic wave signal into the electrical signal, and send the electrical signal to the processing unit; and
the processing unit is configured to receive the electrical signal sent by the receiver, convert the electrical signal into a strain value, and send the strain value and the corresponding rotating speed to the control module.

9. A computer device, comprising a processor and a memory, wherein a computer program is stored in the memory, and when the processor executes the computer program, the method according to any one of claims 1 to 6 is implemented.

10. A computer-readable storage medium, with a computer program stored thereon, wherein when the computer program is executed by a processor, the method according to any one of claims 1 to 6 is implemented.
